# EUROPÄISCHE PATENTSCHRIFT

(11) **EP 1 128 085 B1**
(45) Veröffentlichungstag und Bekanntmachung des Hinweises auf die Patenterteilung: **22.09.2004**
(21) Anmeldenummer: 01102132.6
(22) Anmeldetag: 01.02.2001
(51) Int. Cl.: F16F 1/12

(54) **Federunterlage**
Spring baseplate
Support de base de ressort

(30) Priorität: 26.02.2000 DE 10009136
(43) Veröffentlichungstag der Anmeldung: 29.08.2001
(73) Patentinhaber: Volkswagen Aktiengesellschaft, 38436 Wolfsburg (DE)
(72) Erfinder: Patzer, Georg, 38471 Rühen (DE); Rippel, Thomas, 38471 Rühen (DE)

(56) Entgegenhaltungen:
- EP-A- 0 924 445
- DE-A- 4 007 488
- GB-A- 527 468

## Beschreibung

Die Erfindung betrifft eine Federunterlage zur Anordnung zwischen einem Federteller und einer schraubenförmigen Feder.

Derartige Federunterlagen werden beispielsweise im Fahrzeugbau in Federdämpferanordnungen zur Aufhängung der Fahrzeugräder verwendet. Allerdings ist die Verwendung nicht auf den Fahrzeugbau beschränkt. Vielmehr lassen sich Federunterlagen überall dort einsetzen, wo schraubenförmige Federn gegen einen Federteller abgestützt werden müssen. Der Federteller kann hierbei ein separat mit der Feder zu verwendendes Bauteil sein, jedoch auch integral mit einem Wandabschnitt einer größeren Einheit, z. B. dem Fahrzeugaufbau ausgebildet werden, gegen den sich die Feder abstützt.

Federunterlagen aus Elastomermaterial sind aus dem Stand der Technik generell bekannt. So offenbart beispielsweise die DE 196 32 184 A1 eine elastische Auflage, die aus mehreren Schichten eines Folienmaterials hergestellt ist. Diese wird zwischen der letzten Windung einer Feder und dem zugehörigen Federteller angeordnet. Eine weitere, ausschließlich aus Elastomermaterial bestehende Federunterlage ist aus der DE 196 09 250 A1 bekannt, die als ringartige Scheibe zur Abstützung einer tonnenförmigen Schraubenfeder ausgebildet ist.

Weiterhin ist aus der DE 42 11 176 C2 ein Federbein bekannt, bei dem die Federabstützung gegen einen Federteller über einen massiven Vollgummiring erfolgt. Zur Vermeidung des Ausbeulens einer Schraubenfeder mit nicht-angelegten Federenden ist zwischen dem Federteller und dem Vollgummiring eine Distanzscheibe aus Metall angeordnet, deren Dicke von der einen Seite zu der anderen Seite zunimmt, so daß der Vollgummiring gegen den Federteller schräg abgestützt ist. Hierdurch läßt sich eine gleichmäßige Elastizität der Federabstützung erzielen, womit einem Ausbeulen entgegengewirkt wird. Der konstruktive Aufwand ist jedoch beträchtlich.

Schließlich ist aus der EP 0 924 445 A2 bekannt, ein Verstärkungselement aus Metall in einen Gummikörper einzubetten, so daß dieses vom Gummi umschlossen ist. Zur Vereinfachung der Herstellung wird in der EP 0 924 445 A2 vorgeschlagen, anstelle des Verstärkungselementes aus Metall eines aus Kunststoff zu verwenden.

Weiterhin zeigt die PS GB527468 eine Federunterlage zur Anordnung zwischen einem Federteller und einer schraubenförmigen Feder, umfassend ein Sockelelement aus einem Elastomermaterial zur Abstützung gegen den Federteller, und eine Zwischenplatte vorzugsweise aus Metall, die an der zu der Feder weisenden Seite des Sockelelementes angeordnet ist, wobei die Zwischenplatte einen Anlageabschnitt (15; 29)-aufweist, gegen den wenigstens bei einem stärkeren Einfedem Windungsabschnitte der Feder zur Anlage kommen.

In allen Fällen wird die Federkraft konzentriert im Bereich der aufliegenden Windungsabschnitte der Feder in das Elastomermaterial eingeleitet. Dieses ist folglich entsprechend den maximal auftretenden Kräften und Flächenpressungen unter den aufliegenden Windungsabschnitten zu dimensionieren. Hieraus resultieren sowohl konstruktive Einschränkungen im Hinblick auf die Materialauswahl als auch auf die Formgestaltung.

Zwar könnte eine Abstützung unmittelbar gegen den in der Regel metallischen Federteller in Erwägung gezogen werden. Die unmittelbare Anlage zwischen einer Metallfeder und einem metallischen Federteller ist jedoch bei dynamischer Belastung der Feder, wie sie beispielsweise in einer Radaufhängung beim Betrieb eines Kraftfahrzeuges auftritt, in der Regel mit unangenehmen Quietsch- und Knarzgeräuschen verbunden.

Der Erfindung liegt die Aufgabe zugrunde, eine unter Belastung geräuschfreie Federunterlage bzw. Federanordnung zu schaffen.

Die vorstehend genannte Aufgabe wird gelöst durch eine Federunterlage zur Anordnung zwischen einem Federteller und einer schraubenförmigen Feder, umfassend ein Sockelelement aus einem Elastomermaterial zur Abstützung gegen den Federteller, und eine Zwischenplatte, vorzugsweise aus Metall, die an der zu der Feder weisenden Seite des Sockelelementes angeordnet, wobei die Zwischenplatte einen Anlageabschnitt aufweist, gegen den wenigstens bei stärkerem Einfedem Windungsabschnitte der Feder zur Anlage kommen, und der Anlageabschnitt Öffnungen aufweist, durch welche sich an dem Sockelelement vorgesehene Vorsprünge hindurcherstrecken, die den Anlageabschnitt in Richtung auf die Feder überragen.

Während des Einfederns der Feder wälzen zumindest bei größeren Federkräften Windungsabschnitte der Feder an der Zwischenplatte ab. Vor einer Anlage gegen die Zwischenplatte werden die über die Zwischenplatte hinausragenden Vorsprünge aus dem Material des Sockelelementes niedergedrückt. Hieraus resultiert eine Verminderung der Geräuschemissionen. Im Anlagezustand werden insbesondere höherfrequente Erregungen mit kleinen Amplituden von den Vorsprüngen geschluckt.

Durch die vorzugsweise aus Metall bestehende Zwischenplatte ergibt sich auch eine gewisse Verbreiterung der Krafteinleitung in das aus Elastomermaterial bestehende Sockelelement. Je nach Dicke der Metallplatte kann gegebenenfalls ein weicheres Elastomer oder ein dünneres Sockelelement verwendet werden.

Die Zwischenplatte ist bevorzugt aus einem Opferanodenmaterial, beispielsweise Zink, hergestellt und dient dann dem Korrosionsschutz der Feder.

In einer vorteilhaften Ausgestaltung der Erfindung ist der Anlageabschnitt ringförmig ausgebildet. Weiterhin sind die Öffnungen in der Zwischenplatte als radial gerichtete Längsschlitze an dem ringförmigen Anlageabschnitt vorgesehen. Bei den üblicherweise verwendeten, ringförmigen Schraubenfedem läßt sich damit unabhängig vom Einfederungszustand eine gute Unterdrückung der Geräuschbildung verwirklichen.

Vorzugsweise sind die Vorsprünge in ihrer Umfangsform der Umfangsform der jeweils zugehörigen Öffnung entsprechend ausgebildet. Durch die gleichartige Ausbildung der Vorsprünge und zugehörigen Öffnungen ergibt sich eine klar definierte Lagezuordnung zwischen dem Sockelelement und der Zwischenplatte. Weiterhin schränken die Öffnungen den Verformungsraum der Vorsprünge beim Zusammendrücken ein. Hierdurch ergibt sich eine gewisse strukturelle Versteifungswirkung im Bereich der Vorsprünge, die damit etwas härter sind, als ein frei verformbarer Abschnitt gleichen Materials an dem Sockelelement. Selbst bei der Verwendung eines verhältnismäßig weichen Elastomers kann damit eine gute Unterdrückung der Geräuschbildung gewährleistet werden.

Die Befestigung der Zwischenplatte an dem Sockelelement erfolgt vorzugsweise durch Anvulkanisieren oder Ankleben.

Bevorzugt beträgt der Überstand, um den die Vorsprünge den Anlageabschnitt überragen, 0,75 bis 1,25 mm. In diesem Bereich läßt sich sicherstellen, daß beim Einfedem die Windungsabschnitte der Feder letztlich zur Anlage gegen die steifere Zwischenplatte kommen, um eine gute Krafteinleitung in das Sockelelement zu erzielen, andererseits jedoch die Bildung von Quietsch- und Knarzgeräuschen besonders zuverlässig verhindert wird.

Aus Gründen der Gewichtsersparnis ist es vorteilhaft, wenn die Zwischenplatte als Ringscheibe ausgebildet ist, deren Dicke etwa 5 bis 10 Prozent der Dicke eines untergelagerten Flanschabschnittes des Sockelelements beträgt. Die Ringscheibe läßt sich zudem einfach aus Blechmaterial herstellen.

Zur Vermeidung des Ausbeulens der Feder wird in einer bevorzugten Ausgestaltung der Erfindung an dem Sockelelement ein ringförmiger Zentrierabschnitt zur radialen Anlage gegen einen auslaufenden Windungsabschnitt am Ende der Feder vorgesehen. Der Zentrierabschnitt wird beispielsweise einstückig mit dem Sockelelement ausgebildet. Er kann aber auch als separates Bauteil oder Abschnitt des Federtellers in Richtung der Feder hervorstehend mit dem Sockelelement gekoppelt werden.

In einer weiteren, vorteilhaften Ausgestaltung der Erfindung sind an dem Sockelelement, vorzugsweise an dem Zentrierabschnitt, Verrasteinrichtungen zur Kopplung mit einem auslaufenden Windungsabschnitt am Ende der Feder vorgesehen. Damit kann die Federunterlage bereits vor der Abstützung der Feder an einem Federteller an der Feder gesichert werden und nicht verloren gehen. Dies ist beispielsweise dann vorteilhaft, wenn die Federunterlage in einer vormontierbaren Federdämpferanordnung verwendet wird, die als im wesentlichen vorgefertigte Baueinheit an einem Fahrzeugaufbau anzubringen ist, da der obere Federteller in solchen Fällen oftmals in den Aufbau des Fahrzeugs integriert ist.

Zur Verwendung von Schraubenfedern mit nicht abgeflachten Enden wird in einer weiteren, vorteilhaften Ausgestaltung der Erfindung an dem Sockelelement eine Ausnehmung zur Aufnahme und Abstützung eines auslaufenden Windungsabschnittes am Ende der Feder vorgesehen. Damit ist die Schraubefeder im Normalzustand zunächst weich und ohne Zwischenschaltung eines Metallteils gegen den Federteller abgestützt. Bei einer größeren Einfederung gelangen dann weitere Windungsabschnitte gegen die Zwischenplatte zur Anlage. Hierdurch läßt sich vor allem auch eine progressive Federkennlinie mit einfachen Mitteln verwirklichen.

In einer alternativen Ausführungsform, die sich besonders für Schraubenfedem mit abgeflachten Enden eignet, und die sich durch eine besonders große Einfachheit der Konstruktion auszeichnet, erstreckt sich die Zwischenplatte mit dem Anlageabschnitt bis an den ringförmigen Zentrierabschnitt, wobei im Einbauzustand ein Federende gegen die Zwischenplatte zur Anlage kommt. Eine an das Federende angepaßte Ausnehmung an dem Sockelelement ist dann nicht erforderlich. Diese bleibt folglich in seiner Form einfach und für unterschiedliche Federn verwendbar.

Die obengenannte Aufgabe wird weiterhin gelöst durch eine Federanordnung, umfassend eine schraubenförmige Feder, die zwischen zwei Federtellern angeordnet ist, wobei mindestens zwischen einem der Federteller und der Feder eine Federunterlage der vorstehend beschriebenen Art angeordnet ist. Damit ergeben sich die bereits oben erläuterten Vorteile. Insbesondere wird eine Federanordnung geschaffen, die das Entstehen von Quietsch- und Knarzgeräuschen verhindert.

In einer vorteilhaften Ausgestaltung der Federanordnung ist die schraubenförmige Feder tonnenförmig und mit kleineren Windungsdurchmessem an den Enden der Feder ausgebildet. Auslaufende Windungsabschnitte an den Enden der Feder sind jeweils in einer Ausnehmung an den Sockelelementen der Federunterlagen abgestützt, hingegen kommen Windungsabschnitte mit größerem Windungsdurchmesser wenigstens bei einer stärkeren Einfederung gegen den jeweiligen Anlageabschnitt der Zwischenplatte und die dort befindlichen Vorsprünge des Sockelelements zur Anlage.

Die Erfindung wird nachfolgend anhand von in der Zeichnung dargestellten Ausführungsbeispielen näher erläutert. Die Zeichnung zeigt in
- Figur 1: eine räumliche Ansicht eines ersten Ausführungsbeispiels einer Federunterlage,
- Figur 2: eine Ansicht auf die Seite der Federunterlage von Figur 1, an der eine Feder abgestützt werden kann,
- Figur 3: einen Schnitt durch die Federunterlage nach Figur 1 entlang der Linie A-A in Figur 2,
- Figur 4: eine weitere räumliche Ansicht der Federunterlage nach den Figuren 1 bis 3, bei der ein Sockelelement und eine an dieser vorgesehene Zwischenplatte auseinandergezogen dargestellt sind,
- Figur 5: eine räumliche Ansicht eines zweiten Ausführungsbeispiels einer Federunterlage,
- Figur 6: eine Ansicht auf die Seite der Federunterlage von Figur 5, an der eine Feder abgestützt werden kann,
- Figur 7: einen Schnitt durch die Federunterlage nach Figur 1 entlang der Linie B-B in Figur 6,
- Figur 8: ein weiteres Ausführungsbeispiel einer Federunterlage in einer Ansicht auf die Seite, an welcher eine Feder abgestützt werden kann,
- Figur 9: einen Schnitt durch die Federunterlage nach Figur 8, und in
- Figur 10: ein Ausführungsbeispiel einer Federanordnung mit einer Federunterlage nach Figur 1 und einer Federunterlage nach Figur 2.

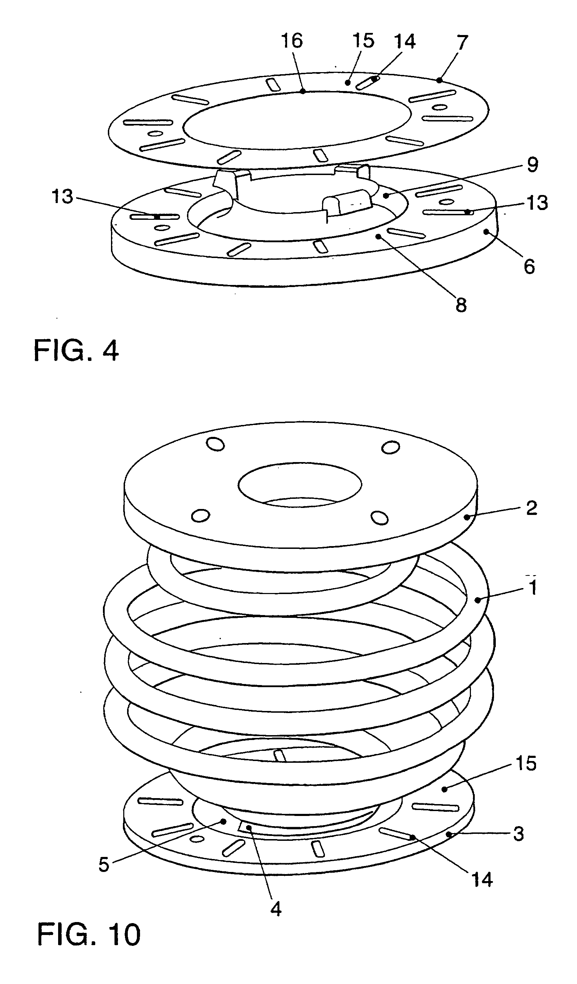

In Figur 10 ist eine Federanordnung dargestellt, die beispielsweise in einer Rad- oder Achsaufhängung eines Kraftfahrzeuges eingebaut werden kann. Sie wird dort zwischen zwei Federtellern, die in der Figur 10 nicht näher dargestellt sind, gehalten, wobei ein oberer Federteller aufbauseitig und ein unterer Federteller radseitig angeordnet sind. Der obere Federteller kann einstückig mit einem Teil des Fahrzeugaufbaus ausgebildet sein.

Die abgebildete Federanordnung umfaßt eine Schraubenfeder 1, die zwischen zwei Federunterlagen 2 und 3 eingegliedert und über diese gegen die Federteller abstützbar ist. Als Schraubenfeder 1 kommt hier eine Stahlfeder mit tonnenförmiger Außenkontur zur Anwendung, deren Windungsdurchmesser gegen die axialen Enden der Feder abnehmen. Die Federenden 4 und 5 sind hier nicht angelegt und in entsprechend geformten Ausnehmungen an den Federunterlagen 2 und 3 aufgenommen. Es ist jedoch auch möglich, anstelle einer Feder mit tonnenförmig Außenkontur eine herkömmliche Zylinder-Schraubenfeder einzusetzen. Auch können die Federenden an die letzte Windung angelegt werden und gegebenenfalls plangeschliffen werden, so daß die Feder mit ihren Enden eben gegen die Federunterlagen anliegt.

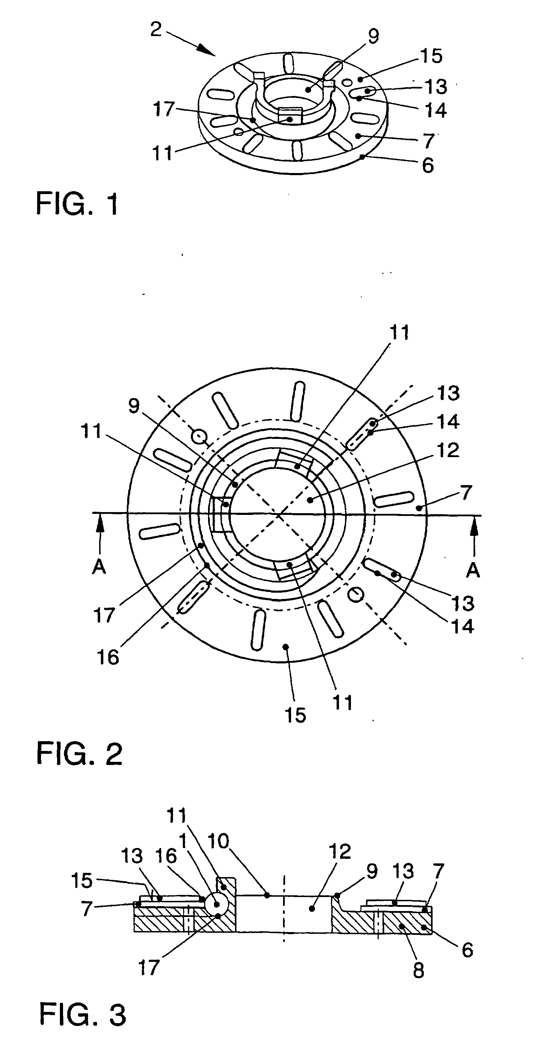

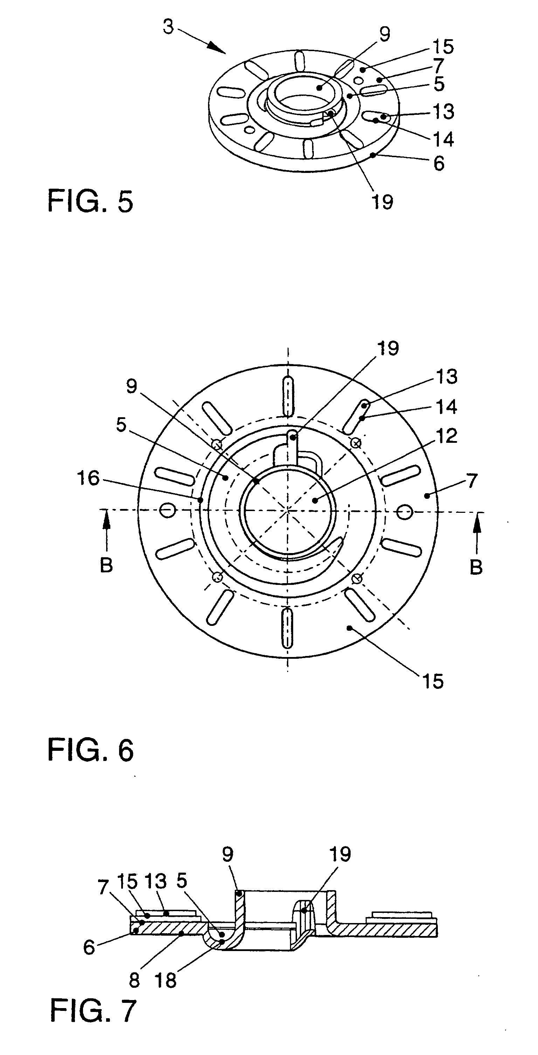

Die in Figur 10 abgebildeten Federunterlagen 2 und 3 sind als erstes Ausführungsbeispiel in den Figuren 1 bis 4 sowie als zweites Ausführungsbeispiel in den Figuren 5 bis 7 im Detail dargestellt und werden nachfolgend näher erläutert.

Die Figuren 1 bis 4 zeigen die obere, aufbauseitige Federunterlage 2 aus Figur 10. Die Federunterlage 2 umfaßt ein ringförmiges Sockelelement 6 aus einem Elastomermaterial und eine Zwischenplatte 7 aus Metall, z.B. Stahl, die an der zu der Feder 1 weisenden Seite angeordnet ist. Das Sockelelement 6 ist als im wesentlichen flache Scheibe ausgebildet und weist einen ringförmigen Flanschabschnitt 8 auf, der sich radial um einen mittig angeordneten Zentrierabschnitt 9 erstreckt. Der ringförmige Flanschabschnitt 8 besitzt eine im wesentlichen konstante Dicke. Von diesem hebt sich der Zentrierabschnitt 9 in Richtung der Feder 1 ab. Er dient vor allem der radialen Festlegung der letzten Windungen der Feder 1 an der Federunterlage 2 und weist an seinem Außenrand 10 mehrere, vorzugsweise drei klauenartige Vorsprünge 11 auf, die mit einem Windungsabschnitt der Feder 1 verhaken bzw. verrasten. Damit kann die Federunterlage 2 unabhängig von einem Federteller an der Feder 1 befestigt und gegen ein Verlieren gesichert werden. Die Zentrierung der Feder 1 erfolgt an einer radialen Außenwand des Zentrierabschnittes 9 unterhalb der klauenartigen Vorsprünge 11. Das Sockelelement 6 umfaßt weiterhin eine zentrale Durchgangsöffnung 12, durch welche beispielsweise ein Abschnitt eines hier nicht dargestellten Dämpfers geführt werden kann.

An der zu der Feder 1 weisenden Seite des ringförmigen Flanschabschnittes 8 ist eine Vielzahl von Vorsprüngen 13 vorgesehen, die sich jeweils als längliche Rippen in Radialrichtung erstrecken. Bevorzugt sind die Vorsprünge 13 gleichmäßig über den Umfang des Flanschabschnittes 8 verteilt. Wie insbesondere aus Figur 2 zu erkennen ist, deckt die Zwischenplatte 7 den Flanschabschnitt 8 auf der Federseite weitestgehend ab. Allerdings sind in der Zwischenplatte 7 den Vorsprüngen 13 entsprechende Öffnungen 14 ausgebildet, durch welche sich die Vorsprünge 13 hindurcherstrecken, um eine federseitige Anlagefläche 15 der Zwischenplatte 7 geringfügig zu überragen. Der Überstand der Vorsprünge 13 beträgt 0,75 bis 1,25 mm. Damit wird sichergestellt, daß bei einem Einfedern Windungsabschnitte der Feder 1 zwar zunächst gegen die Vorsprünge 13 zu Anlage kommen, sich jedoch letztlich gegen die Anlagefläche 15 der Zwischenplatte 7 abstützen. Die Vorsprünge 13 aus Elastomermaterial verhindern während des Abwälzens von Windungsabschnitten der Feder 1 an der Anlagefläche 15 das Auftreten von Quietsch- und Knarzgeräuschen.

Die Zwischenplatte 7 ist, wie insbesondere Figur 4 entnommen werden kann, als dünnwandige, ringförmige Blechscheibe mit konstanter Dicke ausgebildet. Dabei beträgt die Dicke der Blechscheibe lediglich etwa 5 bis 10 Prozent der Dicke des untergelagerten Flanschabschnittes 8 des Sockelelements 6. Die Öffnungen 14 erstrecken sich im wesentlichen über die gesamte Ringbreite der Anlagefläche 15, gegen welche bei einem Einfedern, insbesondere bei einem stärkeren Einfedem der Feder 1 Windungsabschnitte mit größerem Windungsdurchmesser zur Anlage kommen. Bei einer tonnenförmigen Schraubenfeder 1, wie diese in Figur 10 abgebildet ist, können bei höheren Lasten zeitweilig auch mehrere Windungen nebeneinander gegen die Anlagefläche 15 in Anlage kommen, die bei kleineren Federwegen frei schwingen. Hierdurch läßt sich eine mit zunehmendem Federweg steifer werdende Federkennlinie, d. h. ein progressiver Kennlinienverlauf verwirklichen.

Im entlasteten Zustand der Feder 1 ist lediglich ein auslaufender Windungsabschnitt 4 am Ende der Feder gegen die Federunterlage 2 abgestützt, die hierzu zwischen der radialen Innenkante 16 der Zwischenplatte 7 und dem Zentrierabschnitt 9 eine der Form eines auslaufenden Windungsabschnittes angepaßte Ausnehmung 17 aufweist. Bei kleinen Federwegen ist die Feder 1 dann lediglich über das Sockelelement 6 an dem zugehörigen Federteller elastisch abgestützt.

Durch die Verwendung eines unedleren Opferanodenmaterials für die Zwischenplatte 7 wirkt diese als Korrosionsschutz für die Feder 1. Als Opferanodenmaterial kommen vor allem Zinklegierungen oder auch verzinktes Stahlblech in Frage.

Ein weiteres Ausführungsbeispiel einer Federunterlage ist in den Figuren 5 bis 7 gezeigt, welches die in Figur 10 untenliegende, radseitige Federunterlage 3 darstellt. Die Federunterlage 3 umfaßt auch hier wieder ein Sockelelement 6 aus einem Elastomermaterial zur Abstützung gegen einen Federteller. Weiterhin umfaßt die Federunterlage 3 eine metallische Zwischenplatte 7, die an der zu der Feder 1 weisenden Seite des Sockelelementes 6 angeordnet ist.

Dabei sind das Sockelelement 6 und die Zwischenplatte 7 im wesentlichen wie in dem ersten Ausführungsbeispiel ausgebildet, so daß im folgenden lediglich auf die Unterschiede dazu kurz eingegangen wird. Für gleichartige Elemente werden in den Figuren 1 bis 4 und in den Figuren 5 bis 7 die gleichen Bezugszeichen verwendet. Prinzipiell ist es möglich, jede der in den Figuren 1 bis 7 dargestellten Federunterlagen für einen oberen oder einen unteren Federteller zu verwenden. In beiden Ausführungsbeispielen werden hier dieselben Zwischenplatten 7 eingesetzt.

Im Unterschied zu dem ersten Ausführungsbeispiel ist bei dem zweiten Ausführungsbeispiel das Sockelelement 6 ohne klauenartige Vorsprünge 11 ausgebildet. Ein auslaufender Windungsabschnitt der Feder 1 wird allein durch den Zentrierabschnitt 9 an der Federunterlage in einer dem auslaufenden Windungsabschnitt 4 in seiner Form angepaßten Ausnehmung 5 gehalten. Weiterhin ist bei dem zweiten Ausführungsbeispiel der Flanschabschnitt 8 des Sockelelementes 6 mit geringerer Wanddicke ausgeführt, so daß sich im Bereich der Ausnehmung 5 auf der von der Feder 1 abgewandten Seite ein vorstehender Wandbereich 18 ergibt, der die Ausnehmung 5 rückseitig verschließt. Der Wandabschnitt 18 kann beispielsweise zu Zentrierungszwecken gegenüber einem Federteller verwendet werden.

An einer radialen Außenwand des Zentrierabschnittes 9 ist einen Stützvorsprung 19 ausgebildet, der an die tiefste Stelle der Ausnehmung 5 angrenzt. Dieser Stützvorsprung 19 dient der radialen und axialen Abstützung eines Windungsabschnittes der Feder 1. Damit wird verhindert, daß dieser Windungsabschnitte bei einem Zusammendrücken der Feder gegen die unmittelbar darunterliegende Windung, d. h. das Windungsende der Feder 1 in Anlage gelangt. Überdies wird die Zunahme des Windungsdurchmessers kompensiert.

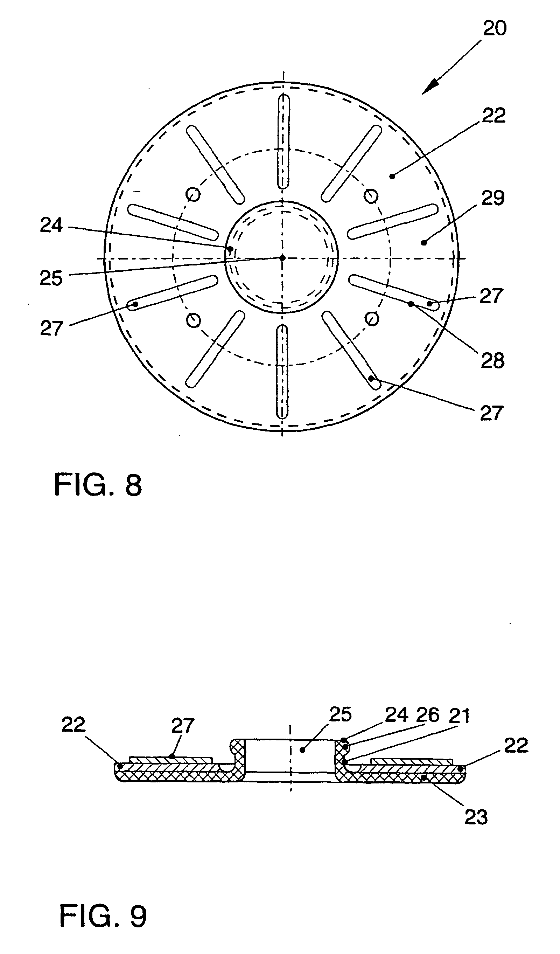

Ein drittes Ausführungsbeispiel ist in den Figuren 8 und 9 dargestellt. Die Federunterlage 20 des dritten Ausführungsbeispiels umfaßt ein Sockelelement 21 aus einem Elastomermaterial zur Abstützung gegen einen nicht dargestellten Federteller, sowie eine Zwischenplatte 22, die an der Federseite des Sockelelementes 21 angeordnet ist. Die Zwischenplatte 22 ist auch hier bevorzugt eine Opferanode für die Feder.

Das Sockelelement 21 wird durch einen ringförmigen Flansch 23 mit einer im wesentlichen konstanten Wanddicke gebildet, der in seiner Mitte einen auf der Federseite vorspringenden Zentrierabschnitt in Form eines Kragens 24 mit einer Durchgangsöffnung 25 aufweist. An der radialen Umfangswand des Kragens 24 ist ein Radialvorsprung 26 vorgesehen, unter dem ein auslaufender Windungsabschnitt einer Feder zu der Federunterlage 20 zentriert und an dieser axial gesichert werden kann.

Der ringförmige Flansch 23 weist an seiner Federseite Vorsprünge 27 auf, die als längliche Rippen in Radialrichtung ausgerichtet sind und sich durch Öffnungen 28 der Zwischenplatte 22 hindurch erstrecken, um deren Anlagefläche 29 für Windungen der Feder zu überragen. Die Vorsprünge 27 und Öffnungen 28 können dabei wie in den beiden zuvor beschriebenen Ausführungsbeispielen dimensioniert werden, wobei die Ringbreite der Anlagefläche 29 in Abhängigkeit von den verwendeten Federn variiert.

Im Unterschied zu den zuvor beschriebenen Ausführungsbeispielen erstreckt sich die Zwischenplatte 22 bis an den Kragen 24 heran, so daß hier eine Ausnehmung für das Ende einer Feder fehlt. Die in dem dritten Ausführungsbeispiel dargestellte Federunterlage 20 eignet sich denn auch besonders für Federn mit einem ebenen Ende, bei denen beispielsweise die auslaufende Windung an eine vorhergehende Windung angelegt und das Ende gegebenenfalls zusätzlich plangeschliffen ist.

Durch die aus den Öffnungen 28 hervorragenden Vorsprünge 27 werden jedoch auch bei dem dritten Ausführungsbeispiel während eines Abwälzens von Windungsabschnitten an der Federunterlage 20 Quietsch- und Knarzgeräusche wirksam unterbunden.

### BEZUGSZEICHENLISTE

- 1: Schraubenfeder
- 2: Federunterlage
- 3: Federunterlage
- 4: auslaufender Windungsabschnitt
- 5: Ausnehmung
- 6: Sockelelement
- 7: Zwischenplatte
- 8: ringförmiger Flanschabschnitt
- 9: Zentrierabschnitt
- 10: Außenrand
- 11: klauenförmiger Vorsprung
- 12: Durchgangsöffnung
- 13: Vorsprung
- 14: Öffnung
- 15: Anlagefläche
- 16: Innenkante
- 17: Ausnehmung
- 18: vorspringender Wandabschnitt
- 19: Stützvorsprung
- 20: Federunterlage
- 21: Sockelelement
- 22: Zwischenplatte
- 23: Flanschabschnitt
- 24: Kragen
- 25: Durchgangsöffnung
- 26: Radialvorsprung
- 27: Vorsprung
- 28: Öffnung
- 29: Anlagefläche

## Patentansprüche

1. Federunterlage zur Anordnung zwischen einem Federteller und einer schraubenförmigen Feder, umfassend ein Sockelelement (6; 21) aus einem Elastomermaterial zur Abstützung gegen den Federteller, und eine Zwischenplatte (7; 22), vorzugsweise aus Metall, die an der zu der Feder weisenden Seite des Sockelelementes (6; 21) angeordnet ist, wobei die Zwischenplatte einen Anlageabschnitt (15; 29) aufweist, gegen den wenigstens bei einem stärkeren Einfedern Windungsabschnitte der Feder zur Anlage kommen, und der Anlageabschnitt (15; 29) Öffnungen (14; 28) aufweist, durch welche sich an dem Sockelelement (6; 21) vorgesehene Vorsprünge (13; 27) hindurcherstrecken, die den Anlageabschnitt (15; 19) in Richtung der Feder überragen.

2. Federunterlage nach Anspruch 1, **dadurch gekennzeichnet, daß** Zwischenplatte (7; 22) als Opferanode für die Feder ausgebildet ist.

3. Federunterlage nach Anspruch 1 oder 2, **dadurch gekennzeichnet, daß** die Öffnungen (14; 28) als radial gerichtete Längsschlitze an einem ringförmigen Anlageabschnitt (15; 29) ausgebildet sind.

4. Federunterlage nach einem der Ansprüche 1 bis 3, **dadurch gekennzeichnet, daß** die Vorsprünge (13; 27) in ihrer Umfangsform der Umfangsform der jeweils zugehörigen Öffnung (14; 28) entsprechend ausgebildet sind.

5. Federunterlage nach einem der Ansprüche 1 bis 4, **dadurch gekennzeichnet, daß** der Überstand, um den die Vorsprünge (13; 27) den Anlageabschnitt (15; 29) überragen, 0,75 bis 1,25 mm beträgt.

6. Federunterlage nach einem der Ansprüche 1 bis 5, **dadurch gekennzeichnet, daß** die Zwischenplatte (7; 22) als Ringscheibe ausgebildet ist, deren Dicke im Bereich von 5 bis 10 Prozent der Dicke eines untergelagerten Flanschabschnittes (8; 23) des Sockelelements (6; 21) liegt.

7. Federunterlage nach einem der Ansprüche 1 bis 6, **dadurch gekennzeichnet, daß** an dem Sockelelement (6; 21) ein ringförmiger Zentrierabschnitt (9; 24) zur radialen Anlage gegen einen auslaufenden Windungsabschnitt (4) am Ende der Feder vorgesehen ist.

8. Federunterlage nach einem der Ansprüche 1 bis 7, **dadurch gekennzeichnet, daß** an dem Sockelelement (6; 21), vorzugsweise an dem Zentrierabschnitt (9; 24), Verrasteinrichtungen (11; 26) zur Kopplung mit einem auslaufenden Windungsabschnitt am Ende der Feder vorgesehen sind.

9. Federunterlage nach einem der Ansprüche 1 bis 8, **dadurch gekennzeichnet, daß** an dem Sockelelement (6) eine Ausnehmung (5, 17) zur Aufnahme und Abstützung eines auslaufenden Windungsabschnittes (4) am Ende der Feder vorgesehen ist.

10. Federunterlage nach einem der Ansprüche 7 bis 9, **dadurch gekennzeichnet, daß** die Zwischenplatte (22) mit dem Anlageabschnitt (29) sich bis an den ringförmigen Zentrierabschnitt (24) erstreckt, derart, daß ein Federende gegen die Zwischenplatte (22) zur Anlage kommt.

11. Federanordnung, umfassend eine schraubenförmige Feder (1), die zwischen zwei Federtellern angeordnet ist, **dadurch gekennzeichnet, daß** mindestens zwischen einem Federteller und der Feder (1) eine Federunterlage (2; 3; 20) nach einem der Ansprüche 1 bis 10 angeordnet ist.

12. Federanordnung nach Anspruch 11, **dadurch gekennzeichnet, daß** die schraubenförmige Feder (1) tonnenförmig mit kleineren Windungsdurchmessem an den Enden der Feder ausgebildet ist und auslaufende Windungsabschnitte (4) an den Enden der Feder jeweils in einer Ausnehmung (5) an dem Sockelelement (6) einer Federunterlage (2; 3) abgestützt sind, hingegen Windungsabschnitte mit einem größeren Windungsdurchmesser zumindest bei einer stärkeren Einfederung der Feder (1) gegen den Anlageabschnitt (15) der jeweiligen Zwischenplatte (7) und die dort befindlichen Vorsprünge (13) des Sockelelementes (6) zur Anlage kommen.

## Claims

1. Spring base for arrangement between a spring plate and a helical spring, comprising a plinth element (6; 21) consisting of an elastomeric material, for support against the spring plate, and an intermediate plate (7; 22), preferably consisting of metal, which is arranged on that side of the plinth element (6; 21) which points towards the spring, the intermediate plate having a bearing portion (15; 29), against which turn portions of the spring come to bear, at least under pronounced compression, and the bearing portion (15; 29) having orifices (14; 28), through which extend projections (13; 27) which are provided on the plinth element (6; 21) and which project above the bearing portion (15; 29) in the direction of the spring.

2. Spring base according to Claim 1, **characterized in that** the intermediate plate (7; 22) is designed as a sacrificial anode for the spring.

3. Spring base according to Claim 1 or 2, **characterized in that** the orifices (14; 28) are designed as radially directed longitudinal slots on an annular bearing portion (15; 29).

4. Spring base according to one of Claims 1 to 3, **characterized in that** the projections (13; 27) are designed to correspond in their circumferential shape to the circumferential shape of the respectively associated orifice (14; 28).

5. Spring base according to one of Claims 1 to 4, **characterized in that** the excess length by which the projections (13; 27) project above the bearing portion (15; 29) is 0.75 to 1.25 mm.

6. Spring base according to one of Claims 1 to 5, **characterized in that** the intermediate plate (7; 22) is designed as an annular disc, the thickness of which lies in the range of 5 to 10 percent of the thickness of an underlying flange portion (8; 23) of the plinth element (6; 21).

7. Spring base according to one of Claims 1 to 6, **characterized in that** the plinth element (6; 21) has provided on it an annular centring portion (9; 24) for bearing radially against a running-out turn portion (4) at the end of the spring.

8. Spring base according to one of Claims 1 to 7, **characterized in that** the plinth element (6; 21), preferably the centring portion (9; 24), has provided on it latching means (11; 26) for coupling to a running-out turn portion at the end of the spring.

9. Spring base according to one of Claims 1 to 8, **characterized in that** the plinth element (6) has provided on it a recess (5, 17) for receiving and supporting a running-out turn portion (4) at the end of the spring.

10. Spring base according to one of Claims 7 to 9, **characterized in that** the intermediate plate (22) having the bearing portion (29) extends as far as the annular centring portion (24), in such a way that a spring end comes to bear against the intermediate plate (22).

11. Spring arrangement, comprising a helical spring (1) which is arranged between two spring plates, **characterized in that** a spring base (2; 3; 20) according to one of Claims 1 to 10 is arranged at least between one spring plate and the spring (1).

12. Spring arrangement according to Claim 11, **characterized in that** the helical spring (1) has a barrel-shaped design with smaller turn diameters at the ends of the spring, and running-out turn portions (4) at the ends of the spring are supported in each case in a recess (5) on the plinth element (6) of a spring base (2; 3), whereas, at least under a pronounced compression of the spring (1), turn portions with a larger turn diameter come to bear against the bearing portion (15) of the respective intermediate plate (7) and against the projections (13) of the plinth element (6) that are located there.

## Revendications

1. Support de base de ressort en vue de l'agencement entre une coupelle de ressort et un ressort hélicoïdal, comprenant un élément de socle (6 ; 21) en un matériau élastomère en vue du support contre la coupelle de ressort, et une plaque intermédiaire (7 ; 22), de préférence en métal, disposée sur le côté de l'élément de socle (6 ; 21) tourné vers le ressort, la plaque intermédiaire présentant une portion d'appui (15 ; 29) contre laquelle des portions de spires du ressort viennent en appui au moins en cas de compression relativement forte, et la portion d'appui (15 ; 29) présentant des ouvertures (14 ; 28) à travers lesquelles des saillies (13 ; 27) prévues sur l'élément de socle (6 ; 21) s'étendent, lesquelles dépassent de la portion d'appui (15 ; 29) dans la direction du ressort.

2. Support de base de ressort selon la revendication 1, **caractérisé en ce que** la plaque intermédiaire (7 ; 22) est réalisée en tant qu'anode réactive pour le ressort.

3. Support de base de ressort selon la revendication 1 ou 2, **caractérisé en ce que** les ouvertures (14 ; 28) sont réalisées en tant que fentes longitudinales orientées de manière radiale sur une portion d'appui annulaire (15 ; 29).

4. Support de base de ressort selon l'une quelconque des revendications 1 à 3, **caractérisé en ce que** les saillies (13 ; 27) sont réalisées dans leur forme périphérique de manière correspondant à la forme périphérique de l'ouverture associée respective (14 ; 28).

5. Support de base de ressort selon l'une quelconque des revendications 1 à 4, **caractérisé en ce que** la projection de laquelle les saillies (13 ; 27) dépassent de la portion d'appui (15 ; 29) vaut de 0,75 à 1,25 mm.

6. Support de base de ressort selon l'une quelconque des revendications 1 à 5, **caractérisé en ce que** la plaque intermédiaire (7 ; 22) est réalisée en tant que disque annulaire dont l'épaisseur est dans la plage de 5 à 10 pour-cent de l'épaisseur d'une portion à brides sous-jacente (8 ; 23) de l'élément de socle (6 ; 21).

7. Support de base de ressort selon l'une quelconque des revendications 1 à 6, **caractérisé en ce qu'**une portion de centrage annulaire (9 ; 24) est prévue sur l'élément de socle (6 ; 21) en vue de l'appui radial contre une portion de spire pointue (4) à l'extrémité du ressort.

8. Support de base de ressort selon l'une quelconque des revendications 1 à 7, **caractérisé en ce que** des dispositifs d'encliquetage (11 ; 26) sont prévus sur l'élément de socle (6 ; 21), de préférence sur la portion de centrage (9 ; 24) en vue de l'accouplement avec une portion de spire pointue à l'extrémité du ressort.

9. Support de base de ressort selon l'une quelconque des revendications 1 à 8, **caractérisé en ce qu'**un évidement (5, 17) est prévu sur l'élément de socle (6) en vue de la réception et du support d'une portion de spire pointue (4) à l'extrémité du ressort.

10. Support de base de ressort selon l'une quelconque des revendications 7 à 9, **caractérisé en ce que** la plaque intermédiaire (22) s'étend avec la portion d'appui (29) jusque sur la portion de centrage annulaire (24) de sorte qu'une extrémité du ressort vienne en appui contre la plaque intermédiaire (22).

11. Agencement de ressorts, comprenant un ressort hélicoïdal (1) disposé entre deux coupelles de ressort, **caractérisé en ce qu'**un support de base de ressort (2 ; 3 ; 20) selon l'une quelconque des revendications 1 à 10 est disposé au moins entre une coupelle de ressort et le ressort (1).

12. Agencement de ressorts selon la revendication 11, **caractérisé en ce que** le ressort hélicoïdal (1) est réalisé avec une forme en barillet avec des diamètres de spires plus petits aux extrémités du ressort et des portions de spires pointues (4) aux extrémités du ressort sont supportées à chaque fois dans un évidement (5) sur l'élément de socle (6) d'un support de base de ressort (2 ; 3), des portions de spires avec des diamètres de spires plus importants venant par contre en appui contre la portion d'appui (15) de la plaque intermédiaire respective (7) et les saillies s'y trouvant (13) de l'élément de socle (6) au moins en cas de compression relativement forte du ressort (1).
